Europäisches Patentamt

European Patent Office

Office européen des brevets

(11) Publication number: **0 244 831**
**A2**

## (12) EUROPEAN PATENT APPLICATION

(21) Application number: 87106515.7

(22) Date of filing: 06.05.87

(51) Int. Cl.4: **C09D 11/00**

(30) Priority: 07.05.86 US 860731
08.07.86 US 883414
16.10.86 US 919522

(43) Date of publication of application:
11.11.87 Bulletin 87/46

(84) Designated Contracting States:
DE FR GB

(71) Applicant: **EASTMAN KODAK COMPANY**
**Patent Department 343 State Street**
**Rochester New York 14650(US)**

(72) Inventor: **Botros, Raouf**
**3100 Research Boulevard P.O. Box 3100**
**Dayton Ohio 45420(US)**

(74) Representative: **Brandes, Jürgen, Dr.rer.nat.**
**Thierschstrasse 8**
**D-8000 München 22(DE)**

(54) Non-crusting ink containing large amounts of humectant.

(57) There is described an aqueous ink comprising at least about 40 wt % of a humectant, and a dye or dye admixture compatible with such large amounts of humectant, that is, an admixture which does not precipitate because of such large amounts of humectant.

EP 0 244 831 A2

## NON-CRUSTING INK CONTAINING LARGE AMOUNTS OF HUMECTANT

This invention relates to printing inks, and more particularly to such inks as are used in drop-on-demand ink jet printers.

Drop-on-demand printers are becoming a significant fraction of the market of ink jet printers. These printers differ from continuous jet printers in that the only time the print head ejects ink, in the case of drop-on-demand, is when printing has to take place. Also, the ejection pressure is thermally generated, rather than hydraulically generated.

Such drop-on-demand printers create new demands on inks to be used with them. Chief of these is that the ink must not crust over between actual printing events, since there is insufficient force in thermal generation to blast through the crust. Unfortunately, crusting over is much more likely to occur with drop-on-demand printers, since there is so much greater quiescent time when the print head sits idly by, exposed to atmospheric drying.

It is well known that humectants, including alkanediols such as ethylene glycol, can be added to an ink to prevent drying out or crusting of the ink. Such is commonly done, for example, in continuous jet inks. However, the amounts used in such inks do not exceed about 5 weight percent, since humectants are highly viscous and the viscosity of continuous jet inks cannot exceed about 2.0 centipoise to be effective.

It is well known that the viscosity restraints are much less for drop-on-demand ink. This would seem to suggest that the crusting problem can be solved by loading up the ink with excess, and even majority, amounts of humectants, wherein "majority" means at least 50 wt %. In fact, "excessive" amounts are recommended, in order to provide a high enough viscosity. However, such excessive amounts of humectants such as ethylene glycol, react adversely with many dyes to cause dye precipitation. Dye precipitation, like crusting, is unsatisfactory as it causes plugging of the print head.

The problem addressed by this invention is to find humectant-dye combinations which allow the ink to avoid crusting while at the same time prevent precipitation of useful amounts of the dye. One solution to this problem has been attempted in the ink used in the "Think Jet" print head available from Hewlett Packard, wherein 60 weight % diethylene glycol is present as a humectant. However, in that case the dye incompatibility that causes precipitation has been dealt with only by reducing the concentration of the dye to the point (5 wt % solids concentration) where precipitation does not occur. Such technique is a well-known approach to precipitation problems. Unfortunately, the amount of this particular black dye that is thus present is so small as to provide insufficient coloration. Thus, this black ink ends up being more grey than black. Grey inks are unsatisfactory for text printing since they reproduce poorly or not at all in electrophotographic copiers.

In accord with the invention, there is provided an aqueous ink composition for use in a drop-on-demand printer comprising a humectant and an acid dye, a direct dye or an admixture of acid dyes or direct dyes; said humectant being a) selected from the group consisting of ethylene glycol; 1,2-propanediol; and 1,3-propanediol; and b) present in an amount sufficient to provide a viscosity of the ink that is from about 5.5 to about 6.5 centipoise, the amount being at least 40 wt %; the dye being sufficiently compatible with the humectant for humectancy and non-precipitation. Such dye compatibility is measured by the following test:

1) Depositing 5 gm of the ink into an aluminum dish so as to expose to the air a surface of the ink that is about 30 cm$^2$,

2) Leaving the deposited ink so exposed for 1 month at a temperature of about 24°C, and

3) Examining the results to ascertain that the ink is totally clear of deposit or crust formation. If there is any such formation, the ink is considered a failure.

Thus, it is an advantageous feature of the invention that a non-crusting ink is provided for drop-on-demand printers which allows the use of sufficient dyes for print quality without dye precipitation in the printer.

It is a related advantageous feature of the invention that such an ink is provided which features solubility compatibility between high amounts of humectant and useful amounts of dye.

This invention is based on the discovery that large amounts of an alkanediol humectant, the humectant of choice, are indeed compatible with certain dyes. The compatibility allows adequate amounts of dye to be used to produce outstanding colors.

In drop-on-demand printers, the high amounts of humectant are selected to insure that the viscosity of the ink is maintained between about 5.5 and 6.5 centipoise. (All viscosities herein are measured at 24°C.) Failure to have a viscosity as high as 5.5 tends to produce undesired cross-talk, in such printers. Viscosity in excess of about 6.5 requires too much energy to eject the ink. Such viscosities of about 5.5-6.5 centipoise in turn depend on the amount of humectant that is present. Generally, the humectant should constitute at least 40 wt % of the ink to meet the viscosity demands. Exactly how much depends on the viscosity of the rest of the ink composition. This depends partly on which dye is used. In some cases, the humectant should constitute as much as 70 weight % of the ink.

The following alkanediols are examples of useful humectants for the invention: Ethylene glycol; 1,2-propanediol; and 1,3-propanediol; with ethylene glycol being most preferred. 1,4-Butanediol is unacceptable as it tends to precipitate the dye or dye admixture.

A surprising aspect of the invention is that dyes can be selected that are compatible with such large amounts of humectant. I have discovered that certain, but by no means all, direct dyes and acid dyes meet this criterion. To be "compatible", a dye or dye admixture must meet the test set forth in the Summary of the Invention. Reactive dyes are not suitable, as they tend to react with atmospheric moisture while on the printed page, and change color.

For color prints, it is necessary that a range of colors be provided. Specifically, the following colors are preferred: black, magenta, red, green, blue, yellow and cyan. Black of course is suitable for the monochrome printing so characteristic of the business office.

The following dyes and admixtures have been found to be compatible using the above-described test. The dyes are all commercially available dyes, most of which are obtained in liquid form.

| No. | Dye(s) | Color |
|-----|--------|-------|
| 1) | Liquid Direct Blue C.I. 279 admixed with a compatible direct red | purple |
| 2) | No. 1) admixed with a liquid direct yellow dye | black |

| No. | Dye(s) | Color |
|---|---|---|
| 3) | Acid Red 51 (also known as Food Red Dye 14) (9.8 wt % dye solids content) | magenta |
| 4) | Liquid Pontamine Fast Red 8BF (28 wt % dye solids content) admixed with liquid Pontamine Yellow RB (17 wt % dye solids content). (Both of these are direct dyes.) | red |
| 5) | Liquid Pontamine Yellow RB admixed with liquid Intrabond Turquoise GLL—IJ (34 wt % dye solids content) (direct dyes) | green |
| 6) | Liquid Intrabond Turquoise GLL—IJ admixed with liquid Pontamine Fast Red 8BF | blue |
| 7) | Liquid Intrabond Turquoise GLL—IJ admixed with Acid Red 51 noted above in No. 3. | blue |
| 8) | Liquid Pontamine Yellow RB | yellow |
| 9) | Liquid Acid Yellow 23 (11 wt % dye solids content) | yellow |
| 10) | Liquid Intrabond Turquoise GLL—IJ | cyan |

In admixture #1 and 2, the most preferred direct red and direct yellow and Direct Red C.I. 236 and Direct Yellow C.I. 107. When used in a weight ratio of blue/red/yellow = 3.53/1.35/1.0, the black of No. 2 above is readily achieved.

A preferred mix for No. 4 above is red/yellow = 11.5/5.3.

A preferred mix for No. 5 above is yellow/turquoise = 6.0/20.0.

A preferred mix for No. 6 above is turquoise/red = 18.18/0.72.

A preferred mix for No. 7 above is turquoise/red = 14.8/5.2.

An additional advantage of this discovery is that the 8 colors noted above can be provided by selecting only 7 dyes. Thus, Pontamine Yellow RB is particularly useful since it appears in three of the colors (yellow, green and red).

For best dye densities on the printed page, except for yellow these liquid dye compositions constitute at least 15 wt % of the prepared ink. (The yellow dye is present at 6 wt %, since higher amounts tend to induce an orange hue.) This insures that the print is sufficiently outstanding as to be readily reproducible on electrophotographic copiers.

The following are the preferred dye-humectant compositions, using the colors noted above using the dyes as numbered above:

4

0 244 831

Dye Solids

| No. | Color | Wt % Dye(s)* | wt % | Ethylene Glycol |
|---|---|---|---|---|
| 2 | Black | 25 | N.A. | 50 wt % |
| 3 | Magenta | 20 | 1.96 | 67 wt % |
| 4 | Red | 16.8 | 4.12 | 60 wt % |
| 5 | Green | 26 | 7.82 | 55 wt % |
| 7 | Blue | 20 | 5.54 | 56 wt % |
| 9 | Yellow | 6 | 1.0 | 66.5 wt % |
| 10 | Cyan | 20 | 6.8 | 52 wt % |

The remainder of the composition is water.

---

*These % are the weight % that the liquid dye comprises of the total ink composition.

An additional, optional addendum to the ink is a corrosion inhibitor, such as an aromatic benzotriazol, in an amount of from 0 to 0.5 wt %. Apart from this, the ink preferably lacks any further addenda, for ease in manufacture.

An ink having each of the preferred compositions noted above, including in one case the corrosion inhibitor, was tested in the humectancy test described in the Summary, and found to have no deposits, precipitates or crust formation. Thus, such dye(s) were found to not precipitate out in the presence of the large amounts of ethylene glycol. Furthermore, these inks have demonstrated outstanding resistance to crust formation and nozzle clogging on the print heads of drop-on-demand ink jet printers. Thus, the humectancy test described above has proven to be an adequate predictor of drop-on-demand printer behavior.

By comparison, the following comparative example ink failed such humectancy test because there was formed a precipitate:

An ink comprising 50 weight % ethylene glycol and C.I. Food Black 2 from Mobay Chemical Co.

**Claims**

1. An aqueous ink composition comprising a humectant and an acid dye, a direct dye or an admixture of acid dyes or direct dyes; said humectant being a) selected from the group consisting of ethylene glycol; 1,2-propanediol; and 1,3-propanediol; and b) present in an amount sufficient to provide a viscosity of said ink that is from about 5.5 to about 6.5 centipoise, said amount being at least 40 wt %; said dye being sufficiently compatible with said humectant for humectancy and non-precipitation such that, when 5 gm of the ink containing said dye and said humectant are deposited into an aluminum dish so as to expose to the air for one month at a temperature of about 24°C, a surface of the ink that is about 30 cm², the ink thereafter is clear of deposits or crust formation.

2. An ink composition as defined in claim 1, wherein said dye or admixture of dyes is selected to produce a color selected from the group consisting of black, magenta, red, green, blue, yellow, and cyan.

3. An ink composition as defined in claim 2, wherein said dye is an admixture of Direct Blue C.I. 279, a compatible direct red dye and a compatible direct yellow dye.

4. An ink composition as defined in claim 2, wherein said dye is Food Red Dye 14.

5. An ink composition as defined in claim 2, wherein said dye is an admixture of a Pontamine Red Dye and a Pontamine Yellow Dye.

6. An ink composition as defined in claim 2, wherein said dye is an admixture of Intrabond Turquoise GLL-IJ and a Pontamine Yellow.

7. An ink composition as defined in claim 2, wherein said dye is an admixture of Intrabond Turquoise GLL-IJ and a Pontamine Red.

8. An ink composition as defined in claim 2, wherein said dye is a Pontamine Yellow.

9. An ink composition as defined in claim 2, wherein said dye is Intrabond Turquoise GLL-IJ.

5

10. An aqueous ink composition as defined in claim 2, wherein said dye comprises: Pontamine Yellow RB by itself or in admixture with a compatible direct dye of a hue sufficient to give said admixture a green or a red color.

11. An ink composition as defined in claim 10, wherein said Pontamine Yellow RB dye is in said dye admixture with said compatible dye and said admixture comprises at least 4 wt % of the ink as a percent of solids.